# EUROPEAN PATENT SPECIFICATION

(11) **EP 4 120 066 B1**
(45) Date of publication and mention of the grant of the patent: **02.04.2025**
(21) Application number: 21382630.8
(22) Date of filing: 12.07.2021
(51) Int. Cl.: G06F 8/65

(54) **REPLACEMENT OF EXECUTABLE LOAD FILES IN SECURE ELEMENTS**
ERSETZEN VON AUSFÜHRBAREN LADEDATEIEN IN SICHEREN ELEMENTEN
REMPLACEMENT DE FICHIERS DE CHARGE EXÉCUTABLES DANS DES ÉLÉMENTS SÉCURISÉS

(43) Date of publication of application: 18.01.2023
(73) Proprietor: Giesecke+Devrient Mobile Security Germany GmbH, 81677 München (DE)
(72) Inventor: Patino, David, 08620 Sant Vicenc dels Horts (ES); Gifre, Clara, 08028 Barcelona (ES); Ruau, Federico, 08907 Hospitalet de Llobregat (ES)
(74) Representative: Giesecke+Devrient IP

(56) References cited:
- EP-A1- 2 887 213
- GLOBALPLATFORM: "Executable Load File Upgrade Card Specification v2.3 - Amendment H", 31 March 2018 (2018-03-31), pages 1 - 52, XP055874127, Retrieved from the Internet <URL:https://globalplatform.org/wp-content/uploads/2018/03/GPC_2.3_H_ELF_Upgrade_v1.1_PublicRelease.pdf> [retrieved on 20211217]

## Description

The present invention relates to smart cards in general and in particular to methods and devices for replacing Executable Load Files in Secure Elements.

### BACKGROUND OF THE INVENTION

Smart cards are widely used in a variety of systems such as mobile phones, payment cards, access cards, to provide identification, authentication, data storage and application processing.

Where the smart card contains security-critical applications and sensitive data, such as in the case of payment cards and the like, a secure element is used to store the data. A secure element is a tamper resistant chip that provides a secure memory and execution environment in which application code and application data can be securely stored and administered. The secure element ensures that access to the data stored on the card is provided only when authorized.

Such a secure element may exist in any form factor such as UICC, embedded SE, smartSD, smart microSD, etc. The GlobalPlatform Card Specifications defines several mechanisms for managing secure elements.

A secure element may include one or more security domains (SDs), each of which includes a collection of data, such as packages, applets, applications, and the like, which are authenticated using security keys.

Security domains may be associated with service providers and may include service provider applets or applications such as loyalty, couponing, and credit card.

Executable Load Files (ELFs) are present in a secure element. An ELF is a package, containing one or more executable modules needed for installing and modifying applications on secure elements. To install an application on a secure element, an ELF containing the executable module(s) related to the application has to be first loaded and stored on the secure element. An executable module is also referred to as an applet, which can be instantiated to one or more application instances.

In particular, the GlobalPlatform Card Specification Version 2.3.1 defines an ELF as being an "Actual on-card container of one or more application's executable code (Executable Modules). It may reside in Immutable Persistent Memory or may be created in Mutable Persistent Memory as the resulting image of a Load File Data Block." Today, all modern digital devices (laptops, handsets, etc.) allow for a software upgrade process, especially where there is a network connection available. The reasons for upgrading software are numerous: fixing bugs, adding new features, etc. With billions of pieces deployed, smart cards definitely need their own software upgrade mechanism. An extension of the GlobalPlatform Card Specification to facilitate the upgrade of ELFs present on a secure element is proposed in GlobalPlatform Technology Executable Load File Upgrade Card Specification v2.3 - Amendment H Version 1.1 (in the following also referred to as "Amendment H"). In particular, Amendment H is providing a context for the upgrade of ELFs, offering two options, namely, new ELF is loaded after removing the old ELF, and new ELF is loaded before removing the old ELF. However, the upgrade process is only applicable to ELFs that do not have any (static or dynamic) dependencies, and the upgrade ELF process would be aborted in case such dependencies were detected.

Patent document EP 2 887 213 A1 (GEMALTO SA [FR]) 24 June 2015 (2015-06-24) discloses the enhanced transfer of applicative data between an instance of an old package and an instance of a new package of an application embedded in a secure element.

It is therefore desirable to provide a solution for upgrading ELFs which address the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a method for upgrading an Executable Load File, ELF, on a Secure Element, SE. The method comprises in a first step receiving a request for upgrading an ELF, the request comprising a first identifier, identifying a first version of the ELF loaded on the SE, a second identifier, identifying a second version of the ELF loaded on the SE, and an upgrade option. Upon receiving the request, dependencies of the first ELF version from other ELFs loaded or stored on the SE are determined. Subsequently, if dependencies have been determined, it is checked whether the upgrade request is allowed. If the update request is allowed, an upgrade session is started and the first ELF version is replaced with the second ELF version. The dependencies of the first ELF version are then linked to the second ELF version.

The proposed method provides an efficient solution to upgrade an ELF, even then, when dependencies to other ELFs are present. More specifically, the proposed method allows to upgrade ELFs independently of upgrading other ELFs that are in a static or dynamic dependency with the ELF being upgraded. This allows for internally linking all ELFs on the SE, which are dependent on an ELF (i.e, the first ELF) to the replacement ELF (i.e., the second ELF), thus ensuring static and dynamic dependencies to be met all the times.

The proposed solution is applicable to the second option provided by the Amendment H, that is, the new ELF is loaded before removing the old ELF. Thus, when the proposed method is invoked, there exists two versions of an ELF being loaded on the SE, the first version (i.e., the old ELF) and the second version (i.e., the new ELF).

In some embodiments of the present invention, the upgrade option is a tag-length-value, TLV, field comprising a plurality of bits, one bit being reserved for indicating to the SE to perform a hot replacement if dependencies have been determined.

Through this application, a hot replacement may refer to the process of updating an ELF version by replacing it with another ELF version without stopping neither the system on which it is executed, nor the application itself.

By incorporating into the upgrading request an upgrade option for indicating to the SE to allow a hot replacement, the basis for allowing ELF upgrades if dependencies are present is set up. Through this upgrade flag the SE is explicitly signaled to not reject an upgrade session or to not abort an already started upgrade session if dependencies have been detected and to allow execution of the upgrade method. With other words, the implementation will accept the ELF Upgrade Request, even if the updated ELF is a dynamic or static dependency for other ELFs. Within the context of both the GlobalPlatform Card Specification and GlobalPlatform Amendment H, such a hot replacement is not supported and a corresponding update request would have been rejected respectively a running upgrade session would have been terminated.

Preferably, checking whether the upgrade request is allowed comprises checking the value of the one bit being reserved for indicating a hot replacement to be equal to 1.

In some embodiments of the present invention, checking whether the upgrade request is allowed comprises checking whether the second ELF version satisfies the dependencies of the first ELF version.

This ensure that the implementation will reject the ELF upgrade request if the new ELF fails to fulfill the existing dynamic or static dependencies.

Preferably, if the value of the one bit being reserved for indicating a hot replacement is 1 and/or the second ELF satisfies the dependencies of the first ELF, then the upgrade request is allowed, otherwise, the upgrade request is rejected.

This ensure that a hot replacement with an ELF version which does not satisfy existing dependencies is not allowed, and thus the integrity of the ELFs and applications stored on the secure element is not tampered.

In some embodiments of the present invention, each one ELF loaded on the SE comprises a first component listing a set of other ELFs imported by classes in the one ELF, and a second component listing for the one ELF instances that are stored or addressed by other ELFs. Preferably, the first component and the second component are persistently stored in a memory of the SE.

Preferably, determining dependencies of the first ELF version from other ELFs loaded on the SE is based on the information contained in the first component and the second component of the first ELF.

In some embodiments of the present invention, linking the dependencies of the first ELF version to the second ELF version comprises for each other ELF on the SE, which has the first ELF version as a dependency, executing a re-linking process to make the each other ELF dependent on the second ELF version.

Preferably, the re-linking process is executed using information contained in the first component and the second component of the first ELF version.

In some embodiments of the present invention, the method further comprises after linking the dependencies of the first ELF version to the second ELF version replacing the second identifier with the first identifier, to identify the second ELF version with the first identifier of the first ELF version.

Preferably, the first ELF version is deleted after being replaced with the second ELF version, that is, after the hot replacement.

The method of any one of the preceding claims, wherein the request for upgrading the ELF is received at the SE within an Application Protocol Data Unit, APDU, command.

According to a second aspect of the present invention, there is provided an Application Protocol Data Unit, APDU, command for upgrading an Executable Load File, ELF, on a Secure Element, SE. The command comprises an upgrade option, wherein the upgrade option is a tag-length-value, TLV, field comprising a plurality of bits, one bit being reserved for indicating to the SE to perform a hot replacement.

According to a third aspect of the present invention, there is provided a device for upgrading an Executable Load File, ELF, on a Secure Element, SE. The device comprises a receiving unit and a processing unit. The receiving unit is configured to receive a request for upgrading an ELF, the request comprising a first identifier, identifying a first version of the ELF loaded on the SE, a second identifier, identifying a second version of the ELF loaded on the SE, and an upgrade option. The processing unit is configured to access a memory of the SE and to determine dependencies of the first ELF version from other ELFs loaded in the memory. If dependencies have been determined, the processor is further configured to check whether the upgrade request is allowed, and if the update request is allowed, start an upgrade session, replace the first ELF version with the second ELF version and link the dependencies of the first ELF version to the second ELF version.

In some embodiments of the present invention according to the third aspect, the upgrade request is received through the APDU command according to the second aspect and the device is configured to perform the method according to the first aspect.

According to a third aspect of the present invention, there is provided a computer program product, comprising instructions which, when the program is executed by a computer, cause the computer to perform the method according to the first aspect.

The aspects and embodiments described herein will allow service providers to effectively and efficiently upgrade ELFs even then, when dependencies to other ELFs are present.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
FIG. 1 shows the relationship between an ELF, an executable module, and an application, as defined in the GlobalPlatform Card Specification;
FIG. 2 shows a flow chart of a method for upgrading an Executable Load File according to an embodiment;
FIG. 3 shows further steps of the method for upgrading an Executable Load File according to an embodiment;
FIG. 4 shows an upgrading scenario of ELFs and their dependencies according to an embodiment;
FIG. 5 shows a further upgrading scenario of ELFs and their dependencies according to an embodiment;
FIG. 6 shows a functional description of a device adapted to perform an embodiment of the method.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended independent claims, with the dependent claims defining preferred embodiments.

In the drawings, like numerals refer to the same or similar functionality throughout the several views.

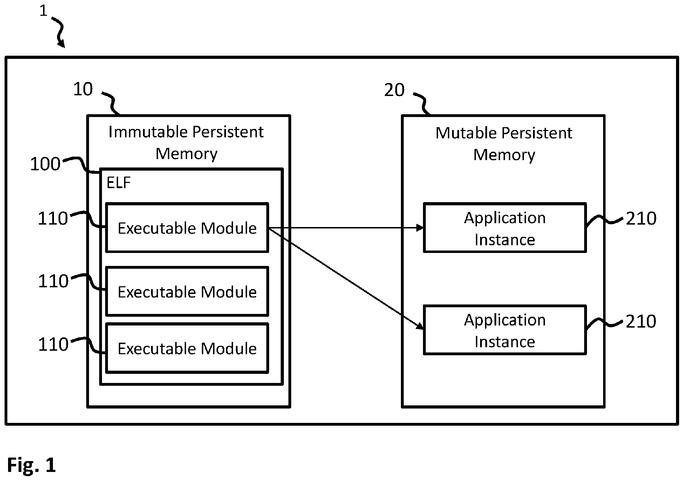

Fig. 1 shows the relationship between an ELF, an executable module, and an application, as specified in the GlobalPlatform Technology Card Specification.

The content on a smart card is initially available on the card's secure element SE 1, in the form of an Executable Load File 100, which is a package, for example a Java Card package, containing one or more executable modules 110 needed for installing and modifying applications on secure elements. The Executable Load File 100 can either exist in the Immutable Persistent Memory 10 (as shown in Fig. 1) in which case it is loaded onto the secure element during the manufacturing stage and cannot be altered (except being disabled), or in the Mutable Persistent Memory 20 (not shown) in which case it can be loaded, or removed during Pre-Issuance or Post-Issuance.

Each Executable Load File 100 may contain one or multiple Executable Modules 110, being application code. The installation of an Application creates an instance 210 from an Executable Module 110, such as a Java Card Applet class, plus possibly Application data within Mutable Persistent Memory 20. A GlobalPlatform card is intended to support multiple Executable Load Files and multiple Executable Modules and as such multiple Applications may co-exist on a GlobalPlatform card.

The ELF upgrade process may be enabled through APDU commands, which are called by the security domains within the secure elements. In particular, the ELF process may be started with the MANAGE ELF UPGRADE command, which is defined in the GlobalPlatform Technology Executable Load File Upgrade Card Specification v2.3 - Amendment H Version 1.1, and which allows starting, resuming, or aborting an ELF Upgrade Session.

As stated in the above-mentioned Amendment H of the GlobalPlatform Card Specification, the MANAGE ELF UPGRADE [start] command is usually rejected with an error and the ELF Upgrade Process is aborted if static dependencies exist that would prevent the old ELF version from being deleted or if any application instance created from the old ELF version is currently selected or suspended. With other words, the conventional upgrade process is only applicable to ELFs that do not have any (static or dynamic) dependencies, and the upgrade ELF process would be aborted in case such dependencies were detected.

The present invention proposes a solution for addressing above-mentioned drawbacks, in particular, an efficient solution to upgrade an ELF, even then, when dependencies to/from other ELFs are present.

Static dependencies are dependencies that appear when classes from a package (i.e., an ELF) "A" link to classes, methods or members from a package (i.e., an ELF) "B". Dynamic dependencies refer to instances of a package "A" that are stored or addressed by a package "B". With other words, static dependencies of an ELF are present in the executable code within the Executable Module(s) on the ELF. On the other hand, dynamic dependencies do not come from the applications' executable code, but from its data during execution. An ELF A storing a chunk of data from a construct coming from ELF B, has a dynamic dependency on B.

In the following an ELF to be replaced will interchangeably be referred to as a first ELF version, while the replacement ELF will interchangeably be referred to as a second ELF version.

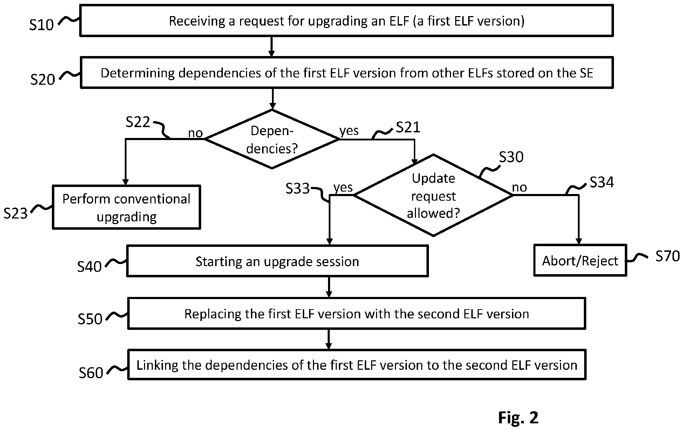

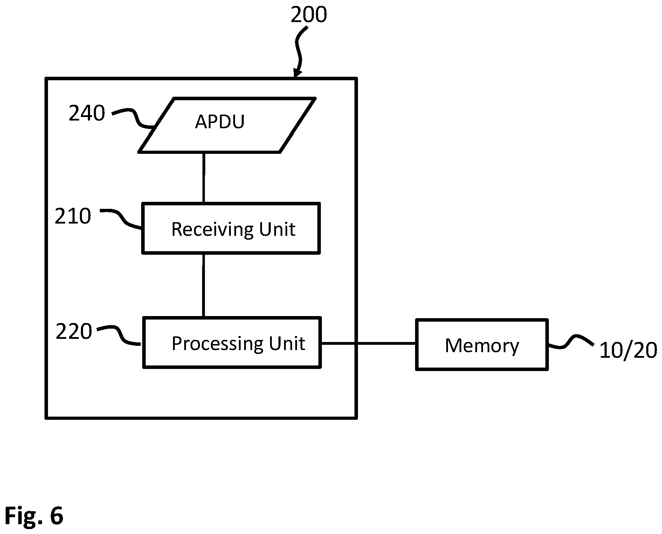

Fig. 2 shows a flow chart of a method for upgrading an Executable Load File (ELF) according to an embodiment. Fig. 6 shows a functional description of a corresponding device 200, which is adapted to perform the method for upgrading an Executable Load File of Fig. 2.

With reference to Fig. 2, in a first step S10, a request for upgrading an ELF is received at a secure element SE, for instance at the SE 1 of Fig. 1. The request may be received from a service provider (not shown).

With reference to Fig. 6, the request may be received at the receiving unit 210 of the device 200 through an APDU command 240.

Preferably, the request received in step S10 of Fig. 2 comprises a first identifier, identifying a first version 101 of the ELF stored or loaded on the SE 1, a second identifier, identifying a second version 102 of the ELF stored or loaded on the SE 1, and an upgrade option.

In a further step S20, dependencies between the first ELF version 101 and other ELFs stored/loaded on the SE 1 are determined, that is, it is determined whether there are other ELFs loaded/stored on the secure element, which are in a dependency relationship with the first ELF.

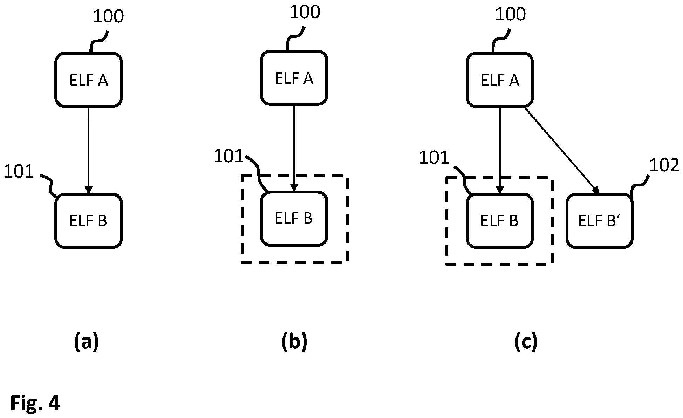

An example of such a dependency relationship is depicted in Fig. 4(a). Therein, a first ELF B 101 is in a static dependency with another ELF A 100.

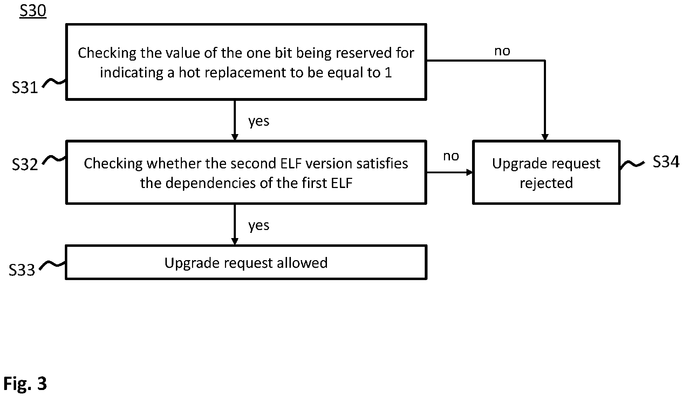

If dependencies have been determined S21, it is checked in a further step S30 whether the upgrade request is allowed. An implementation embodiment of this step will be described further below with reference to Fig. 3.

In the case the above check is affirmative, step S33 in Fig. 2, the actual replacement of the first ELF version with the second ELF version is performed. Preferably, this is implemented by steps S40, S50 and S60 of Fig. 2. In particular, an update session is started in step S40, upon which the first ELF version is replaced with the second ELF version in step S50. After the replacement, the dependencies of the first ELF version, which have been determined in step S20, are (re-)linked to the second ELF version in step S60.

If no dependencies involving the first ELF version have been determined in step S20 ('no' branch S22), the conventional replacement method as defined in GlobalPlatform Amendment H is executed in step S23.

The MANAGE ELF UPGRADE command, as defined in Amendment H of the GlobalPlatform Card specification, is expecting ELF Upgrade Request tags, where the old ELF AID (first ELF identifier) and the new ELF AID (second ELF identifier) is given.

The MANAGE ELF UPGRADE command message comprises a data field, which is TLV (Tag Length Value) encoded. Specifically, the tag '80' sets upgrade options, according to Table 1.

**Table 1: Coding of Upgrade Options TLV**

| b8 | b7 | b6 | b5 | b4 | b3 | b2 | b1 | Meaning |
|---|---|---|---|---|---|---|---|---|
| - | - | - | - | - | - | - | 0 | Legacy. Shall be set to 0. |
| - | - | - | - | - | - | x | - | RFU |
| - | - | - | - | - | 1 | - | - | Trigger Restore Phase automatically |
| 1 | - | - | - | - | - | - | - | Automatically resume after power loss |
| - | x | x | x | X | - | - | - | RFU |

As stated above at the beginning of this section, the conventional upgrade process is only applicable to ELFs that do not have any (static or dynamic) dependencies, and the upgrade ELF process would be aborted in case such dependencies were detected.

To indicate the underlying implementation that a hot replacement should be allowed, according to an embodiment of the present invention, a new flag is added to the upgrade option of Table 1. This may be implemented by fixing one of the RFU bits (which are bits reserved for future use) to indicate a "hot replacement" to signal to the processing unit of the secure element (SE) to not reject/abort the replacement procedure in case dependencies have been detected between the ELF to be replaced and other ELFs on the secure element. Alternatively, a new bit may be added to the 8-bit long upgrade option defined in the Amendment H.

According to a preferred embodiment, the upgrade option may be sent within an Application Protocol Data Unit, APDU, command for upgrading an Executable Load File, ELF, on a Secure Element, SE. The APDU command is preferably sent by a service provider via a security domain of the SE.

Fig. 3 shows further steps for implementing step S30 of checking whether the update request is allowed, according to an embodiment of the invention.

With reference to Fig. 3, in a step, S31, it is checked by the processing unit 220 (c.f., Fig. 6) whether the upgrade option, received with the upgrading request in step S10 is accordingly set to allow for a hot replacement. More specifically, it is checked the value of the one bit being reserved for indicating a hot replacement to be equal to 1 (or true).

If this is not the case, the update request is rejected in step S34.

If a hot update has been requested, in a further step S32 it is checked whether the second ELF version satisfies the dependencies of the first ELF. Preferably, the processing unit 220 will reject (step S34) the ELF upgrade request if the new ELF fails to fulfill the existing dynamic or static dependencies of the ELF to be replaced.

If both checks in step S31 and step S32 are affirmative, the upgrade request is allowed in step S33. In this way the integrity of the applications on the SE is preserved.

Fig. 3 shows an embodiment in which both checks in step S31 and S32 are performed for deciding whether the upgrade request is allowed or not. Alternatively, according to further preferred embodiments, the upgrade request may be allowed based on only one check, either the check in step S31 or the check in step S32.

The above-described method for upgrading an ELF, makes use of dependencies between ELFs stored on the secure element. These dependencies may be determined during loading and linking of an ELF, based on information available in the ELF. Preferably, each ELF 100 loaded on the SE 1 comprises a first component listing a set of other ELFs imported by classes in the one ELF, and a second component listing for the one ELF instances that are stored or addressed by other ELFs.

The information within the first component may be listed within the Import Component defined in the Java Card 3 Platform, Virtual Machine Specification, Version 3.0.5. The Import Component lists the set of packages imported by the classes in this package and is represented by the following structure:

```
 import_component {
  u1 tag
  u2 size
  u1 count
  package_info packages[count]
 }.
```

The information within the second component of an ELF may for instance be listed within the Constant Pool Component, also defined in the Java Card 3 Platform, Virtual Machine Specification, Version 3.0.5. The Constant Pool Component is described by the following structure:

```
 constant_pool_component {
  u1 tag
  u2 size
  u2 count
  cp_info constant_pool[count]
 }.
```

Usually, the information contained within the Import Component and the Constant Pool Component is discarded after linking. However, this information is needed in case of a hot replacement for executing the re-linking process after the old (first) ELF has been replaced by the new (second) ELF.

Therefore, according to an embodiment of the present invention, the first component and the second component (respectively the information contained therein) are persistently stored in a memory of the secure element. This can be the Immutable Persistent Memory 10 or the Mutable Persistent Memory 20 of the SE 1 depicted in Fig. 1.

Based on the information available in the first and second component of an ELF, which is persistently stored, all dependencies of the ELF (ELF version) can be determined all the time as long as the ELF is stored on the SE, and used for re-linking the dependencies of an old ELF to the new ELF after replacement.

This allows to make those ELFs depend now on the newly loaded ELF, leaving the old ELF without any dependent ELFs and ready to be deleted.

Finally, the old (first) ELF version can be deleted, after being replaced by the new (second) ELF version and dependencies re-linked accordingly.

Preferably, after linking the dependencies of the first ELF version 101 to the second ELF version 102, the second identifier is replaced with the first identifier. This allows to identify the second ELF version 102 with the first identifier of the first ELF version 101. In this way, the ELF AID is kept unchanged after replacement.

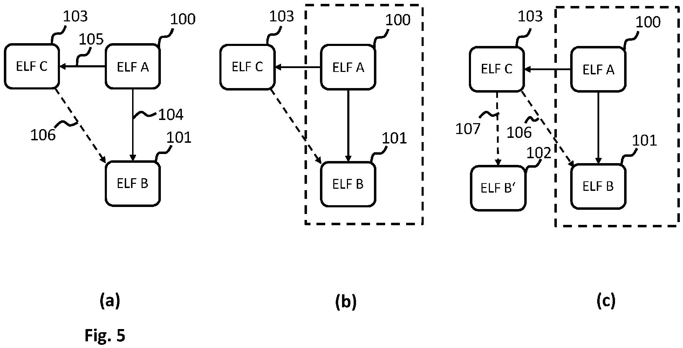

Various upgrading scenarios of ELFs and their dependencies, in which the method according to this invention is applied, will be described in the following with reference to Figures 4 and 5. Specifically, Fig. 4 covers the case of static dependencies being present between ELFs, while Fig. 5 illustrates how dynamic dependencies are handled.

Fig. 4(a) shows two ELFs A 100 and B 101, whereas ELF A has ELF B as a static dependency. That is, executable code from A explicitly calls or uses elements of the executable code from ELF B.

In Fig. 4(b) ELF B is selected for upgrading. Upgrading ELF B (i.e., first ELF) implies deleting it and loading a different version of it. Within the context of GP Card Specification, deleting ELF B without also deleting ELF A will fail, as it would leave orphaned dependencies. Within the context of GP Amendment H, this scenario is expected to fail too (c.f., Amendment H specification, section 3.2.1), for the same reasons.

The method according to an embodiment as presented in Fig. 2, aims at internally linking all dependents on an ELF to the replacement ELF, thus ensuring static dependencies are met at all times. This makes the upgrade procedure from Fig. 4(a) possible, without being forced to also delete the dependent ELF A.

Fig. 4(c) depicts the result of performing the method according to this invention on the scenario from Fig. 4(a). The static dependency relationship from ELF A is switched over to replacement ELF B' 102 (i.e., second ELF), thus there are no more constraints, which would require to delete ELF A as well, when deleting ELF B.

Fig. 5 covers the case when dynamic dependencies are involved in addition to static dependencies.

Fig. 5(a) shows three ELFs with static respective dynamic dependencies between pairs. Executable code from ELF A 100 explicitly calls or uses elements of the executable code from ELF B 101 and stores some data/objects from ELF B into ELF C. ELF A also calls ELF C 103. With other words, ELF A has ELF B and ELF C as static dependencies 104, 105. On the other hand, ELF C has ELF B as a dynamic dependency 106. ELF C is not statically dependent on ELF B.

Fig. 5(b) shows an attempt to upgrade ELF A and B at the same time, on the scenario from Fig. 5(a).

Although executable code from ELF C does not know anything about ELF B (as ELF C has no static dependency on ELF B), the object stored in C does. Within the context of GP Card Specification, deleting ELF B without also deleting ELF C will fail, as it would leave orphaned dependencies. Within the context of GP Amendment H, this scenario is expected to fail as well (c.f., Amendment H specification, section 3.2.2), for the same reasons. Moreover, according to Amendment H, dynamic dependencies can also be created during the data saving phase, when an application may ask the system to preserve an object related to one of the upgraded ELFs, this would make the involved ELF undeletable, breaking the upgrade procedure.

The method according to an embodiment as presented in Fig. 2, aims at internally linking all dependents on an ELF to the replacement ELF, thus ensuring all dependencies are met at all times. This makes the upgrade procedure from Fig. 5(a) possible, without being forced to also delete the dependent ELF C (which in turn would also need deleting ELF A).

By implementing the claimed method, ELF C is (re-)linked to the replacement of ELF B, that is to ELF B'. Through executing a linking process on ELF C, ELF B' becomes a dynamic dependency of ELF C (line 107), thus guaranteeing that all dynamic dependencies are met after replacement of ELF B by ELF B', as depicted in Fig. 6(c). As the dynamic dependency relationship of ELF B is switched over to the replacement ELF B', neither ELF C nor ELF A need to be deleted, upon deleting ELF B.

The methods, interface and apparatus as described through the embodiments above, allow to upgrade ELFs independently of upgrading other ELFs that are in a static or dynamic dependency with the ELF being upgraded, while ensuring that all dependency relationships are preserved.

With the proposed solution, ELFs that have static and dynamic dependencies can thus be upgraded and relinked with their environment without further effects regarding functionality and relationship with other packages.

In the foregoing specification, the invention has been described with reference to specific embodiments thereof. It will, however, be evident that various modifications and changes may be made thereto without departing from the scope of the invention, which is defined by the appended independent claims, with dependent claims defining preferred embodiments.

For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for upgrading an Executable Load File, ELF (100), on a Secure Element, SE (1), the method comprising:
- receiving (S10) a request for upgrading an ELF (100), the request comprising a first identifier, identifying a first ELF version (101) loaded on the SE (1), a second identifier, identifying a second ELF version (102) loaded on the SE (1), and an upgrade option;
- determining (S20) dependencies of the first ELF version (101) from other ELFs (100) loaded on the SE (1);
- if dependencies have been determined (S21), checking (S30) whether the upgrade request is allowed; and
- if the update request is allowed (S33):
- starting (S40) an upgrade session;
- replacing (S50) the first ELF version (101) with the second ELF version (102); and
- linking (S60) the dependencies of the first ELF (101) version to the second ELF version (102),
wherein the upgrade option is a tag-length-value, TLV, field comprising a plurality of bits, one bit being reserved for indicating to the SE (1) to perform a hot replacement, that is, to allow the upgrade session, if dependencies have been determined.

2. The method according to claim 1, wherein checking (S30) whether the upgrade request is allowed comprises checking (S31) the value of the one bit being reserved for indicating a hot replacement to be equal to 1.

3. The method according to claim 1 or 2, wherein checking (S30) whether the upgrade request is allowed comprises checking (S32) whether the second ELF version (102) satisfies the dependencies of the first ELF version (101).

4. The method according to claim 3, further comprising:
if the value of the one bit being reserved for indicating a hot replacement is 1 and/or the second ELF version (102) satisfies the dependencies of the first ELF version (101), then allowing (S33) the upgrade request, otherwise, rejecting (S34, S70) the upgrade request.

5. The method according to any one of the preceding claims, wherein each one ELF (100) loaded on the SE (1) comprises a first component listing a set of other ELFs imported by classes in the one ELF, and a second component listing for the one ELF instances that are stored or addressed by other ELFs, wherein the first component and the second component are persistently stored in a memory (10; 20) of the SE (1).

6. The method according to claim 5, wherein determining (S20) dependencies of the first ELF version (101) from other ELFs (100) loaded on the SE (1) is based on the information contained in the first component and the second component of the first ELF version (101).

7. The method according to any one of the preceding claims, wherein linking the dependencies of the first ELF version (101) to the second ELF version (102) comprises:
for each other ELF on the SE (1), which has the first ELF version (101) as a dependency, executing a re-linking process, to make the each other ELF dependent on the second ELF version (102).

8. The method according to claim 7, wherein the re-linking process is executed using information contained in the first component and the second component of the first ELF version (101).

9. The method according to any one of the preceding claims, further comprising after linking the dependencies of the first ELF version (101) to the second ELF version (102) replacing the second identifier with the first identifier.

10. The method according to any one of the preceding claims, further comprising deleting the first ELF version (101) after replacing the first ELF version with the second ELF version (102).

11. A device (200) for upgrading an Executable Load File, ELF (100), on a Secure Element, SE (1), the device (200) comprising:
- a receiving unit (210), configured to receive a request for upgrading an ELF (100), the request comprising a first identifier, identifying a first ELF version (101) loaded on the SE, a second identifier, identifying a second ELF version (102) loaded on the SE, and an upgrade option;
- a processing unit (220), configured to:
- access a memory (10; 20) of the SE (1) and to determine dependencies of the first ELF version (101) from other ELFs loaded in the memory (10; 20);
- if dependencies have been determined, check whether the upgrade request is allowed; and
- if the update request is allowed, start an upgrade session, replace the first ELF version (101) with the second ELF version (102) and link the dependencies of the first ELF version (101) to the second ELF version (102),
wherein the upgrade option is a tag-length-value, TLV, field comprising a plurality of bits, one bit being reserved for indicating to the SE (1) to perform a hot replacement, that is, to allow the upgrade session, if dependencies have been determined.

12. The device (200) according to claim 11, and wherein the device (200) is further configured to perform the method of any one of claims 1 to 10.

13. A computer program product, comprising instructions which, when the program is executed by a computer, cause the computer to perform:
- receiving a request for upgrading an ELF (100), the request comprising a first identifier, identifying a first ELF version (101) loaded on a SE (1), a second identifier, identifying a second ELF version (102) loaded on the SE (1), and an upgrade option;
- determining dependencies of the first ELF version (101) from other ELFs stored on the SE;
- if dependencies have been determined, checking whether the upgrade request is allowed; and
- if the update request is allowed, starting an upgrade session, replacing the first ELF version (101) with the second ELF version (102) and linking the dependencies of the first ELF version (101) to the second ELF version (102),
wherein the upgrade option is a tag-length-value, TLV, field comprising a plurality of bits, one bit being reserved for indicating to the SE (1) to perform a hot replacement, that is, to allow the upgrade session, if dependencies have been determined.

## Patentansprüche

1. Verfahren zum Aktualisieren einer ausführbaren Ladedatei, ELF, (100), auf einem sicheren Element, SE, (1), wobei das Verfahren umfasst:
- Empfangen (S10) einer Anforderung zum Aktualisieren einer ELF (100), wobei die Anforderung eine erste Kennung, die eine erste ELF-Version (101) identifiziert, die auf das SE (1) geladen ist, eine zweite Kennung, die eine zweite ELF-Version (102) identifiziert, die auf das SE (1) geladen ist, und eine Aktualisierungsoption umfasst;
- Bestimmen (S20) von Abhängigkeiten der ersten ELF-Version (101) von anderen ELFS (100), die auf das SE (1) geladen sind;
- wenn Abhängigkeiten bestimmt wurden (S21), Prüfen (S30), ob die Aktualisierungsanforderung zulässig ist; und
- wenn die Aktualisierungsanforderung zulässig ist (S33):
- Starten (S40) einer Aktualisierungssitzung;
- Ersetzen (S50) der ersten ELF-Version (101) durch die zweite ELF-Version (102) und
- Verknüpfen (S60) der Abhängigkeiten der ersten ELF-Version (101) mit der zweiten ELF-Version (102),
wobei die Aktualisierungsoption ein Tag-Länge-Wert-Feld, TLV-Feld, ist, das eine Vielzahl von Bits umfasst, wobei ein Bit reserviert ist, um dem SE (1) anzugeben, ein Ersetzen während des Betriebs durchzuführen, das heißt, die Aktualisierungssitzung zuzulassen, wenn Abhängigkeiten bestimmt wurden.

2. Verfahren nach Anspruch 1, wobei das Prüfen (S30), ob die Aktualisierungsanforderung zulässig ist, ein Prüfen (S31), ob der Wert des einen Bits, das reserviert ist, um ein Ersetzen während des Betriebs anzugeben, gleich 1 ist, umfasst.

3. Verfahren nach Anspruch 1 oder 2, wobei das Prüfen (S30), ob die Aktualisierungsanforderung zulässig ist, ein Prüfen (S32), ob die zweite ELF-Version (102) die Abhängigkeiten der ersten ELF-Version (101) erfüllt, umfasst.

4. Verfahren nach Anspruch 3, das ferner umfasst:
wenn der Wert des einen Bits, das reserviert ist, um ein Ersetzen während des Betriebs anzugeben, 1 ist und/oder die zweite ELF-Version (102) die Abhängigkeiten der ersten ELF-Version (101) erfüllt, dann Zulassen (S33) der Aktualisierungsanforderung, andernfalls Ablehnen (S34, S70) der Aktualisierungsanforderung.

5. Verfahren nach einem der vorhergehenden Ansprüche, wobei jede auf das SE (1) geladene ELF (100) eine erste Komponente, die einen Satz anderer ELFs auflistet, die durch Klassen in der einen ELF importiert werden, und eine zweite Komponente, die für die eine ELF Instanzen auflistet, die durch andere ELFs gespeichert oder adressiert werden, umfasst, wobei die erste Komponente und die zweite Komponente persistent in einem Speicher (10; 20) des SE (1) gespeichert werden.

6. Verfahren nach Anspruch 5, wobei das Bestimmen (S20) von Abhängigkeiten der ersten ELF-Version (101) von anderen ELFs (100), die auf das SE (1) geladen sind, auf den Informationen basiert, die in der ersten Komponente und der zweiten Komponente der ersten ELF-Version (101) enthalten sind.

7. Verfahren nach einem der vorhergehenden Ansprüche, wobei das Verknüpfen der Abhängigkeiten der ersten ELF-Version (101) mit der zweiten ELF-Version (102) umfasst: für jede andere ELF auf dem SE (1), die die erste ELF-Version (101) als Abhängigkeit aufweist, Ausführen eines Neuverknüpfungsprozesses, um die jede andere ELF von der zweiten ELF-Version (102) abhängig zu machen.

8. Verfahren nach Anspruch 7, wobei der Neuverknüpfungsprozess unter Verwendung von Informationen ausgeführt wird, die in der ersten Komponente und der zweiten Komponente der ersten ELF-Version (101) enthalten sind.

9. Verfahren nach einem der vorhergehenden Ansprüche, das ferner nach dem Verknüpfen der Abhängigkeiten der ersten ELF-Version (101) mit der zweiten ELF-Version (102) ein Ersetzen der zweiten Kennung durch die erste Kennung umfasst.

10. Verfahren nach einem der vorhergehenden Ansprüche, das ferner ein Löschen der ersten ELF-Version (101) nach dem Ersetzen der ersten ELF-Version durch die zweite ELF-Version (102) umfasst.

11. Vorrichtung (200) zum Aktualisieren einer ausführbaren Ladedatei, ELF, (100) auf einem sicheren Element, SE, (1), wobei die Vorrichtung (200) umfasst:
- eine Empfangseinheit (210), die zum Empfangen einer Anforderung zum Aktualisieren einer ELF (100), wobei die Anforderung eine erste Kennung, die eine erste ELF-Version (101) identifiziert, die auf das SE geladen ist, eine zweite Kennung, die eine zweite ELF-Version (102) identifiziert, die auf das SE geladen ist, und eine Aktualisierungsoption umfasst, konfiguriert ist;
- eine Verarbeitungseinheit (220), die konfiguriert ist zum:
- Zugreifen auf einen Speicher (10; 20) der SE (1) und zum Bestimmen von Abhängigkeiten der ersten ELF-Version (101) von anderen ELFS, die in den Speicher (10; 20) geladen sind;
- wenn Abhängigkeiten bestimmt wurden, Prüfen, ob die Aktualisierungsanforderung zulässig ist; und
- wenn die Aktualisierungsanforderung zulässig ist, Starten einer Aktualisierungssitzung, Ersetzen der ersten ELF-Version (101) durch die zweite ELF-Version (102) und Verknüpfen der Abhängigkeiten der ersten ELF-Version (101) mit der zweiten ELF-Version (102),
wobei die Aktualisierungsoption ein Tag-Länge-Wert-Feld, TLV-Feld, ist, das eine Vielzahl von Bits umfasst, wobei ein Bit reserviert ist, um dem SE (1) anzugeben, ein Ersetzen während des Betriebs durchzuführen, das heißt, die Aktualisierungssitzung zuzulassen, wenn Abhängigkeiten bestimmt wurden.

12. Vorrichtung (200) nach Anspruch 11, und wobei die Vorrichtung (200) ferner zum Durchführen des Verfahrens nach einem der Ansprüche 1 bis 10 konfiguriert ist.

13. Computerprogrammprodukt, das Anweisungen umfasst, die, wenn das Programm durch einen Computer ausgeführt wird, bewirken, dass der Computer durchführt:
- Empfangen einer Anforderung zum Aktualisieren einer ELF (100), wobei die Anforderung eine erste Kennung, die eine erste ELF-Version (101) identifiziert, die auf ein SE (1) geladen ist, eine zweite Kennung, die eine zweite ELF-Version (102) identifiziert, die auf das SE (1) geladen ist, und eine Aktualisierungsoption umfasst;
- Bestimmen von Abhängigkeiten der ersten ELF-Version (101) von anderen ELFS, die auf dem SE gespeichert sind;
- wenn Abhängigkeiten bestimmt wurden, Prüfen, ob die Aktualisierungsanforderung zulässig ist; und
- wenn die Aktualisierungsanforderung zulässig ist, Starten einer Aktualisierungssitzung, Ersetzen der ersten ELF-Version (101) durch die zweite ELF-Version (102) und Verknüpfen der Abhängigkeiten der ersten ELF-Version (101) mit der zweiten ELF-Version (102),
wobei die Aktualisierungsoption ein Tag-Länge-Wert-Feld, TLV-Feld, ist, das eine Vielzahl von Bits umfasst, wobei ein Bit reserviert ist, um dem SE (1) anzugeben, ein Ersetzen während des Betriebs durchzuführen, das heißt, die Aktualisierungssitzung zuzulassen, wenn Abhängigkeiten bestimmt wurden.

## Revendications

1. Procédé de mise à niveau d'un fichier de charge exécutable, ELF (100), sur un élément sécurisé, SE (1), le procédé comprenant les étapes suivantes :
- recevoir (S10) une demande de mise à niveau d'un ELF (100), la demande comprenant un premier identifiant, identifiant une première version d'ELF (101) chargée sur le SE (1), un deuxième identifiant, identifiant une deuxième version d'ELF (102) chargée sur le SE (1), et une option de mise à niveau ;
- déterminer (S20) les dépendances de la première version d'ELF (101) par rapport à d'autres ELF (100) chargés sur le SE (1) ;
- si les dépendances ont été déterminées (S21), vérifier (S30) si la demande de mise à niveau est autorisée ; et
- si la demande de mise à niveau est autorisée (S33) :
- démarrer (S40) une session de mise à niveau ;
- remplacer (S50) la première version d'ELF (101) par la deuxième version d'ELF (102) ; et
- lier (S60) les dépendances de la première version d'ELF (101) à la deuxième version d'ELF (102),
où l'option de mise à niveau est un champ de type balise-longueur-valeur, TLV, comprenant une pluralité de bits, un bit étant réservé pour indiquer au SE (1) d'effectuer un remplacement à chaud, c'est-à-dire d'autoriser la session de mise à niveau, si des dépendances ont été déterminées.

2. Procédé selon la revendication 1, dans lequel la vérification (S30) de l'autorisation, ou non, de la demande de mise à niveau comprend de vérifier (S31) si la valeur du bit étant réservé pour indiquer un remplacement à chaud est bien égale à 1.

3. Procédé selon la revendication 1 ou la revendication 2, dans lequel la vérification (S30) de l'autorisation, ou non, de la demande de mise à niveau comprend de vérifier (S32) si la deuxième version d'ELF (102) satisfait aux dépendances de la première version d'ELF (101).

4. Procédé selon la revendication 3, comprenant en outre l'étape suivante :
si la valeur du bit étant réservé à l'indication d'un remplacement à chaud est 1 et/ou si la deuxième version d'ELF (102) satisfait aux dépendances de la première version d'ELF (101), autoriser (S33) la demande de mise à niveau, sinon rejeter (S34, S70) la demande de mise à niveau.

5. Procédé selon l'une quelconque des revendications précédentes, dans lequel chaque ELF (100) chargé sur le SE (1) comprend un premier composant listant un ensemble d'autres ELF importés par classes dans l'ELF, et un deuxième composant listant pour l'ELF des instances stockées ou adressées par d'autres ELF, où le premier composant et le deuxième composant sont stockés de manière persistante dans une mémoire (10 ; 20) du SE (1).

6. Procédé selon la revendication 5, dans lequel la détermination (S20) des dépendances de la première version d'ELF (101) par rapport à d'autres ELF (100) chargés sur le SE (1) est basée sur les informations contenues dans le premier composant et le deuxième composant de la première version d'ELF (101).

7. Procédé selon l'une quelconque des revendications précédentes, dans lequel la liaison des dépendances de la première version d'ELF (101) à la deuxième version d'ELF (102) comprend l'étape suivante :
pour chaque autre ELF sur le SE (1), qui a la première version d'ELF (101) comme dépendance, exécuter un processus de re-liaison, pour rendre chaque autre ELF dépendant de la deuxième version d'ELF (102).

8. Procédé selon la revendication 7, dans lequel le processus de re-liaison est exécuté à l'aide des informations contenues dans le premier composant et le deuxième composant de la première version d'ELF (101).

9. Procédé selon l'une quelconque des revendications précédentes, comprenant en outre, après avoir lié les dépendances de la première version d'ELF (101) à la deuxième version d'ELF (102), de remplacer le deuxième identifiant par le premier identifiant.

10. Procédé selon l'une quelconque des revendications précédentes, comprenant en outre de supprimer la première version d'ELF (101) après avoir remplacé la première version d'ELF par la deuxième version d'ELF (102).

11. Dispositif (200) pour la mise à niveau d'un fichier de charge exécutable, ELF (100), sur un élément sécurisé, SE (1), le dispositif (200) comprenant :
- une unité de réception (210) configurée pour recevoir une demande de mise à niveau d'un ELF (100), la demande comprenant un premier identifiant, identifiant une première version d'ELF (101) chargée sur le SE, un deuxième identifiant, identifiant une deuxième version d'ELF (102) chargée sur le SE, et une option de mise à niveau ;
- une unité de traitement (220), configurée pour :
- accéder à une mémoire (10 ; 20) du SE (1) et déterminer les dépendances de la première version d'ELF (101) par rapport à d'autres ELF chargés dans la mémoire (10 ; 20) ;
- si des dépendances ont été déterminées, vérifier si la demande de mise à niveau est autorisée ; et
- si la demande de mise à niveau est autorisée, démarrer une session de mise à niveau, remplacer la première version d'ELF (101) par la deuxième version d'ELF (102), et lier les dépendances de la première version d'ELF (101) à la deuxième version d'ELF (102),
où l'option de mise à niveau est un champ de type balise-longueur-valeur, TLV, comprenant une pluralité de bits, un bit étant réservé pour indiquer au SE (1) d'effectuer un remplacement à chaud, c'est-à-dire d'autoriser la session de mise à niveau, si des dépendances ont été déterminées.

12. Dispositif (200) selon la revendication 11, dans lequel le dispositif (200) est en outre configuré pour exécuter le procédé de l'une quelconque des revendications 1 à 10.

13. Produit programme informatique comprenant des instructions qui, lorsque le programme est exécuté par un ordinateur, amènent l'ordinateur à exécuter les opérations suivantes :
- recevoir une demande de mise à niveau d'un ELF (100), la demande comprenant un premier identifiant, identifiant une première version d'ELF (101) chargée sur un SE (1), un deuxième identifiant, identifiant une deuxième version d'ELF (102) chargée sur le SE (1), et une option de mise à niveau ;
- déterminer les dépendances de la première version d'ELF (101) par rapport à d'autres ELF stockés sur le SE ;
- si des dépendances ont été déterminées, vérifier si la demande de mise à niveau est autorisée ; et
- si la demande de mise à niveau est autorisée, démarrer une session de mise à niveau, remplacer la première version d'ELF (101) par la deuxième version d'ELF (102) et lier les dépendances de la première version d'ELF (101) à la deuxième version d'ELF (102),
où l'option de mise à niveau est un champ de type balise-longueur-valeur, TLV, comprenant une pluralité de bits, un bit étant réservé pour indiquer au SE (1) d'effectuer un remplacement à chaud, c'est-à-dire d'autoriser la session de mise à niveau, si des dépendances ont été déterminées.
